(19)

Europäisches
Patentamt
European
Patent Office
Office européen
des brevets

(11) **EP 3 920 401 A1**

(12) **EUROPEAN PATENT APPLICATION**

(43) Date of publication:
   **08.12.2021 Bulletin 2021/49**

(51) Int Cl.:
   ***H02M 3/335*** (2006.01)

(21) Application number: **20191075.9**

(22) Date of filing: **14.08.2020**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**
   Designated Extension States:
   **BA ME**
   Designated Validation States:
   **KH MA MD TN**

(30) Priority: **02.06.2020 CN 202010491556**

(71) Applicant: **Xi'an University of Science and
   Technology
   Xi'an City Shaanxi (CN)**

(72) Inventors:
   • **Liu, Shulin**
     **Xi'an City, Shaanxi (CN)**
   • **An, Bochen**
     **Xi'an City, Shaanxi (CN)**
   • **Liu, Xu**
     **Xi'an City, Shaanxi (CN)**
   • **Wang, Wenqiang**
     **Xi'an City, Shaanxi (CN)**
   • **Wu, Xing**
     **Xi'an City, Shaanxi (CN)**
   • **Yan, Jizhi**
     **Xi'an City, Shaanxi (CN)**

(74) Representative: **Mirlach, Xiaolu
   Giechstraße 5
   81249 München (DE)**

(54) **SECONDARY SERIES LCD EXCITATION ENERGY TRANSFER FORWARD CONVERTER CAPABLE OF SUPPRESSING OUTPUT ENERGY BACKFLOW**

(57)    The present disclosure provides a secondary series LCD excitation energy transfer forward converter capable of suppressing output energy backflow, comprising a forward converter main circuit and an energy transfer and transmission circuit connected to the forward converter main circuit. The forward converter main circuit includes a high-frequency transformer T, a switching tube S, a diode D1, a diode D2, an inductance L1, and a capacitor C1. The energy transfer and transmission circuit includes a diode D3, a capacitor C2, a diode D4, and an inductance L2. The circuit structure of the present disclosure has simple circuit structure and high reliability. The diode D4 ensures that the energy at the output end will not reverse, which reduces the reactive power loss of the converter. And the excitation energy could be transferred to the load side to improve the energy transmission efficiency. In addition, the reverse recovery problem of the diode could be eliminated by the soft switch-off or soft switch-on of the switching tube, which further reducing the loss of switching tube and diodes and improving the overall efficiency.

FIG. 1

Printed by Jouve, 75001 PARIS (FR)

**Description**

TECHNICAL FIELD

This patent disclosure relates to a field of switching power supplies, in particular to a secondary series LCD excitation energy transfer forward converter capable of suppressing output energy backflow.

BACKGROUND

The isolated switching power supply includes flyback converter, half-bridge/full-bridge converter and forward converter. Compared with the flyback converter, the power of the forward converter is not limited by the ability of the transformer to store energy; Compared with half-bridge and full-bridge converters, the forward converter uses fewer components, has simpler circuits, lower costs, and higher reliability.

Therefore, due to its relatively simple structure, low cost, input and output isolation, and high operational reliability, the forward converter circuit is more suitable for application in small and medium-power power conversion occasions, and is highly concerned by the industry. However, for the single-tube forward converter, because it works in the state of forward excitation, its high-frequency transformer core is unidirectionally magnetized, and itself has no magnetic reset function, which makes it very likely to cause problems such as magnetic core saturation. Moreover, the result of magnetic saturation will cause the current flowing through the switching tube to increase sharply, or even damage the switching tube, which to a large extent limits the promotion of the forward converter.

Therefore, a special magnetic reset circuit or energy transfer circuit must be added to avoid magnetic core saturation. The main working mechanism of the magnetic reset circuit is to transfer the excitation energy during the switch off time of each cycle, which can be consumed on other devices or returned to the input power supply or transmitted to the load end. There are many types of magnetic reset circuits used in existing forward converters, which are roughly divided into three types. One is to insert a reset winding at the input end to return energy to the input power; the second is to connect reset circuits such as RCD and LCD on the primary side of the transformer to consume energy or return to the input end; the third is to take reset measures on the secondary side to transfer energy to the output end. The traditional RCD clamping circuit is relatively simple, and its shortcoming is that the excitation energy is consumed in the clamping resistor, which makes it difficult to improve the overall efficiency of the system; active clamping technology is a good method to achieve magnetic reset, but it increases the complexity, design difficulty and cost of the converter circuit; the reset method of the magnetic reset winding is mature and reliable, and the excitation energy can be returned to the input power supply, but the magnetic reset winding increases the complexity of the transformer structure and the voltage stress of the power switching tube.

However, the existing reset measures on the secondary side either need to increase the reset winding or circuit complexity, which increases the difficulty and cost of the design and manufacturing of the transformer or circuit; or need to use more diodes to realize energy transfer, which increases circuit losses; or it will affect the working mode of forward inductance or other electrical performance indicators, which is not conducive to high power transmission.

Therefore, in order to further promoting the application of forward converters, solving the problem of magnetic reset, improving its comprehensive performance, and addressing the shortcomings of other reset methods, researching on new magnetic reset methods is a subject that needs to be continuously discussed.

SUMMARY

An object of the present disclosure is to provide a secondary series LCD excitation energy transfer forward converter capable of suppressing output energy backflow. Then problems of the existing magnetic reset circuit can be solved, such as low excitation energy utilization rate, complex circuit composition, large loss, low efficiency, and the problems like the deficiency that the existing secondary side reset that affects the working mode of the forward inductance also can be solved.

The present disclosure provides a secondary series LCD excitation energy transfer forward converter capable of suppressing output energy backflow to solve technical problems of the present disclosure, comprising a forward converter main circuit (1) and an energy transfer and transmission circuit (2) connected to the forward converter main circuit (1); the forward converter main circuit (1) includes a high-frequency transformer T, a switching tube S, a diode D1, a diode D2, an inductance L1, and a capacitor C1; the same-named end of the primary side of the high-frequency transformer T is the positive voltage input end IN+ of the forward converter main circuit (1), which is connected to the positive output end of the external power supply, and the different-named end of the primary side of the high--frequency transformer T is connected to the drain of the switching tube S; the source of the switching tube S is the negative voltage input end IN- of the forward converter main circuit (1), which is connected to the negative output end of the external power supply; the gate of the switching tube S is connected to the output end of the external controller; the same-named end of the secondary side of the high-frequency transformer T is connected to the anode of the diode D1, the cathode of the diode D1 is connected to the cathode of the diode D2 and one end of the inductance L1; the other end of the inductance L1 is connected to one end of the capacitor C1 and is the positive voltage output end OUT+ of forward converter main circuit (1); the different-named end of the secondary side of the high-frequency transformer T is connected to the anode of the diode D2 and the other end of the capacitor C1 and is the negative voltage output end OUT- of the forward converter main circuit (1); the negative voltage output end OUT- of the forward converter main circuit (1) is grounded; the energy transfer and transmission circuit (2) includes a diode D3, a capacitor C2, a diode D4, and an inductance L2; the anode of the diode D3 is connected to the anode of the diode D2, the cathode of the diode D3 is connected to one end of the capacitor C2, the other end of the capacitor C2 is connected to the anode of the diode D1, one end of the inductance L2 is connected to the cathode of the diode D4, the other end of the inductance L2 is connected to the cathode of the diode D1, and the anode of the diode D4 is connected to the cathode of the diode D3.

In one embodiment, the diodes D1 and D2 are fast recovery diodes.

In one embodiment, the switching tube S is a fully-controlled power semiconductor device.

In one embodiment, the capacitor C2 of the secondary series LCD excitation energy transfer forward converter capable of suppressing output energy backflow is selected according to the first selection step; the steps of the first selection step include: step 101, selecting the capacitance $C_2$ of the capacitor C2 of energy storage; step 102, combining the input voltage $V_i$ of the converter to calculate the withstand voltage $V_{C2,max}$ of the capacitor C2 of energy storage; step 103, selecting the capacitor of energy storage with a capacitance $C_2$ and a withstand voltage greater than $V_{C2,max}$.

In one embodiment, the inductance L1 of the secondary series LCD excitation energy transfer forward converter capable of suppressing output energy backflow is selected according to the second selection step; the steps of the second selection step include: step 201, determining the maximum current $I_{L1,max}$ of the inductance L1; step 202, determining the value range of the inductance $L_1$ of the inductance L1; step 203, selecting the inductance according to the steps 201 and 202.

In one embodiment, the diode D3 and the diode D4 of the secondary series LCD excitation energy transfer forward converter capable of suppressing output energy backflow are selected according to the third selection step; the steps of the third selection step include: step 301, calculating the maximum current $I_{D3,max}$ flowing through the diode D3; step 302, calculating the withstand voltage $V_{D3,max}$ of the diode D3; step 303, selecting the diode according to the maximum current $I_{D3,max}$ flowing through the diode and the withstand voltage $V_{D3,max}$ of the diode; step 304, calculating the maximum current $I_{D4,max}$ flowing through the diode D4; step 305, calculating the withstand voltage $V_{D4,max}$ of the diode D4; step 306, selecting the diode according to the maximum current $I_{D4,max}$ flowing through the diode and the withstand voltage $V_{D4,max}$ of the diode.

Compared with the prior art, the present disclosure has the following advantages:

1. the excitation energy is transferred to the load side, which improves the utilization rate of transformer excitation energy and improves the overall efficiency of the converter;

2. a series diode D4 is added to the inductance L2, which could suppress the energy return problem at the output end and reduce reactive loss;

3. the switching tube S could be switched off at low voltage or even zero voltage, which reduces the loss of the circuit;

4. the switching tube S could be switched on at low voltage, which reduces the switching loss of the switching tube;

5. the reverse recovery problem and reverse surge current of the diode could be eliminated, which reduces the diode loss;

6. the series branch consisting of the capacitor C2, diode D4 and inductance L2 could only transmits excitation energy, which reduces the value of inductance L2 and saves costs;

7. compared with the existing secondary magnetic reset forward converter, the energy transfer and transmission circuit could not affect the working mode of the forward inductance and is more suitable for high-power applications.

8. compared with the auxiliary winding reset, the secondary series LCD excitation energy transfer forward converter capable of suppressing output energy backflow simplifies the design and manufacture of transformer and reduces the cost of transformer.

In summary, the circuit structure of the present disclosure is simple, easy to implement and low in cost, high in working stability and reliability, low in power consumption, high in transformer utilization. Further, the circuit structure of the present disclosure can realize soft switching and has high overall efficiency, strong practicability, high value of popularization and application.

The above and other features, examples and their implementations are described in greater detail in the description, the drawings, and the claims.

BRIEF DESCRIPTION OF DRAWINGS

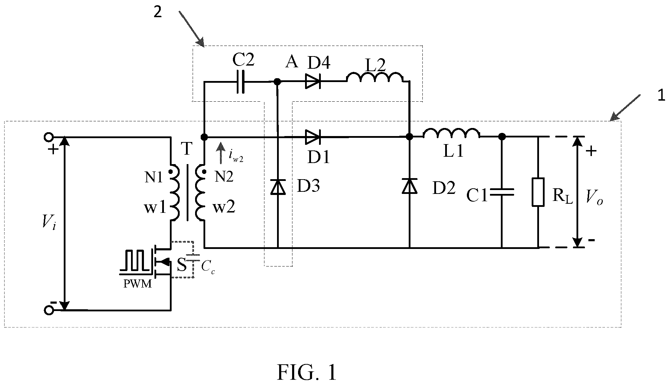

FIG. 1 is a circuit schematic diagram of the secondary series LCD excitation energy transfer forward converter capable of suppressing output energy backflow of the present disclosure.

In the drawings:

1: forward converter main circuit; 2: energy transfer and transmission circuit.

DETAILED DESCRIPTION

As shown in FIG. 1, in one embodiment, the present disclosure provides a secondary series LCD excitation energy transfer forward converter capable of suppressing output energy backflow, comprising a forward converter main circuit 1 and an energy transfer and transmission circuit 2 connected to the forward converter main circuit 1; the forward converter main circuit 1 includes a high-frequency transformer T, a switching tube S, a diode D1, a diode D2, an inductance L1, and a capacitor C1; the same-named end of the primary side of the high-frequency transformer T is the positive voltage input end IN+ of the forward converter main circuit 1, which is connected to the positive output end of the external power supply, and the different-named end of the primary side of the high--frequency transformer T is connected to the drain of the switching tube S; the source of the switching tube S is the negative voltage input end IN- of the forward converter main circuit 1, which is connected to the negative output end of the external power supply; the gate of the switching tube S is connected to the output end of the external controller; the same-named end of the secondary side of the high-frequency transformer T is connected to the anode of the diode D1, the cathode of the diode D1 is connected to the cathode of the diode D2 and one end of the inductance L1; the other end of the inductance L1 is connected to one end of the capacitor C1 and is the positive voltage output end OUT+ of forward converter main circuit 1; the different-named end of the secondary side of the high-frequency transformer T is connected to the anode of the diode D2 and the other end of the capacitor C1 and is the negative voltage output end OUT- of the forward converter main circuit 1; the negative voltage output end OUT-of the forward converter main circuit 1 is grounded; the energy transfer and transmission circuit 2 includes a diode D3, a capacitor C2, a diode D4, and an inductance L2; the anode of the diode D3 is connected to the anode of the diode D2, the cathode of the diode D3 is connected to one end of the capacitor C2, the other end of the capacitor C2 is connected to the anode of the diode D1, one end of the inductance L2 is connected to the cathode of the diode D4, the other end of the inductance L2 is connected to the cathode of the diode D1, and the anode of the diode D4 is connected to the cathode of the diode D3.
specifically, the load RL is connected between the positive voltage output end OUT+ and the negative voltage output end OUT- of the forward converter main circuit 1. In the forward converter main circuit 1, both the inductance L1 and the capacitor C1 are used for filtering.
In one embodiment, the diode D1 is a rectifier diode, and the diode D2 is a fast recovery diode. The diode D2 is used for freewheeling.
In one embodiment, the switching tube S is an NMOS switching tube.
The working principle of this embodiment is:
Before analyzing the working principle of this embodiment, it is assumed that the forward inductance L1 works in CCM, the auxiliary inductance L2 and the transformer secondary inductance Lw2 work in DCM. The working principle of this embodiment is analyzed in the present disclosure, which is divided into the off period and the on period of the switching tube. In order to facilitate the introduction of the principle, the convention is as follows: for C2, the voltage is assumed to be a forward voltage when the left voltage of C2 is negative and the right voltage of C2 is positive, the voltage is assumed to be a reverse voltage when the left voltage of C2 is positive and the right voltage of C2 is negative; for the secondary winding w2, the current is assumed to be a forward current when the current of w2 is from bottom to top, the current is assumed to be a reverse current when the current of w2 is from top to bottom.

1. The energy transmission process and working principle during the off period of the switching tube S

It is assumed that before the switching tube is switched off, the energy of inductance L2 is transferred to C2 completely, the reverse voltage of C2 is risen to the maximum value, the current of inductance L2 is zero, and the forward current of w2 and the current of L1 are risen to the maximum. D1 is switched on, while D2, D3, and D4 are switched off.

Stage 1: the switching tube is switched off at low voltage

After the driving signal of the switching tube changes from high level to low level, the switching tube is entered into the off period. In the process of the switching tube passing from the conduction to the shutdown, the parasitic capacitance of the switching tube is charged by the excitation current and secondary reflected current, the primary voltage and secondary voltage of the transformer is decreased. Once the secondary voltage is decreased to be equal to the reverse voltage of C2, this stage is over. At this stage, the voltage borne by the switching tube is Vi-nVC2 (Vi is input voltage, VC2 is the maximum reverse voltage of C2, n is the transformer ratio), so the voltage borne by the switching tube is much smaller than Vi, and the switching tube is switched off at low voltage (under certain parameters, zero voltage shutdown can also be achieved). At this stage, D1 is kept on, while D2, D3, and D4 are switched off.

Stage 2: the reverse energy storage of capacitor C2 is released

After the secondary voltage is decreased to be equal to the reverse voltage of C2, D3 is switched on (at zero voltage and zero current), and the reverse energy storage of capacitor C2 begins to be released. At this time, D1 is kept on, and the reverse energy storage of C2 is released through two loops: one is that the reverse energy storage of C2 is released through D1, L1, RL, and D3, which makes the diode D1 not switch off immediately, while D2 is still kept off; the other is that the reverse energy storage of C2 is released through W2 and D3. The capacitor C2 is discharged until the reverse voltage is dropped to zero, the primary voltage and the secondary voltage of the transformer is also decreased to zero at the same time (the voltage across the switching tube is risen to Vi), the reverse energy storage of C2 is released completely, and this stage is over. At this stage, D4 is kept off, the current of inductance L2 is remained at zero, D1 is switched off at zero voltage and zero current, while D2 is switched on at zero current.

Stage 3: the forward energy of capacitor C2 is stored

This stage begins, after the reverse voltage of the capacitor C2 is dropped to zero. After that, D3 is kept on, the current of secondary winding of the transformer begins to be decreased from the maximum, and the capacitor C2 is charged forward, and the forward voltage of the capacitor C2 is increased from zero, until the excitation current coupled to the secondary winding of the transformer is dropped to zero, the forward voltage of C2 is reached the maximum, the magnetic reset of the transformer is completed, and this stage is over. At this stage, D4 is kept on and the current of the inductance L2 is remained at zero. At the end of this stage, D3 is switched off at zero current and zero voltage.

Stage 4: energy is transferred from the capacitor C2 to L2 and w2

After the forward voltage of the capacitor C2 is risen to the maximum, D3 is switched off, D4 is swtiched on, and D2 is kept on. Therefore, the loops of C2, D4, L2, and w2 are short-circuited, and energy is transferred from the capacitor C2 to L2 and w2. The current resonance of secondary w2 and the inductance L2 are increased, and the current of the inductance L1 is decreased, until the current of the inductance L2 is risen to be equal to the current of the inductance L1, the current flowing through the diode D2 is zero, shutdown at zero current of D2 is achieved, and this stage is over.

Stage 5: the energy of the capacitor C2 is released through the load

The current of the inductance L2 is risen to be equal to the current of the inductance L1, after the diode D2 being switched off, D4 is still kept on. At this time, the energy of the capacitor C2 is released to L2, L1, RL, and w2, until the forward voltage of C2 is dropped to zero. this stage is over. At this stage, D4 is switched on, while D1, D2, and D3 are kept off.

Stage 6: a loop formed by Lw2, L1, and load, creating conditions for the switching tube to be switched on at low-voltage

After the forward voltage of C2 being dropped to zero, D1 is switched on, at this time, a loop is formed by L2, D1, C2 and D4. C2 is charged in reverse by L2, and the reverse voltage is risen slowly; a freewheeling loop is formed by w2, D1, L1 and RL, and the current of the freewheeling loop is dropped linearly, energy is provided to RL by the freewheeling loop that creates conditions for the switching tube to be switched on at low-voltage. At this stage, D1 is switched on at zero voltage and zero current.

2. The energy transmission process and working principle during the on period of the switching tube S

Stage 1: the switching tube is switched on at low voltage

Before the switching tube being switched on, the voltage across C2 is zero, and a circulation circuit is formed by w2, D1, L1, and RL, the voltage at the top of secondary winding w2 of the transformer is positive and the voltage at the bottom of the secondary winding w2 of the transformer is negative. Actually, the output voltage is divided by the series connection of w2 and L1, but since the inductance of w2 is much greater than the inductance of L1, the partial voltage Vw2 of w2 is higher. Therefore, the voltage across the switching tube is Vi-nVw2 (Vi is input voltage, Vw2 is the voltage across the secondary winding w2 of the transformer, n is the transformer ratio). Obviously, the voltage borne by the switching tube is much smaller than Vi. If the switching tube is switched on at this time, then the switching tube is switched at low voltage.

Stage 2: positive excitation energy is transmitted, energy of L2 is exchanged to C2

After the switching tube being switched on, the input voltage Vi is applied to both ends of the primary winding of the transformer, the voltage at the top of primary winding is positive and the voltage at the bottom of primary winding is negative, the voltage coupled to the secondary winding w2 is also positive at the top and negative at the bottom, D1 is kept on, forward excitation energy is transferred to the load through the inductance L1, and the current of L1 is risen linearly. As D1 is switched on, the series branches of C2, D4, and L2 are short-circuited, C2 is charged in reverse by inductance L2, the current of L2 is slowly decreased, and reverse voltage of capacitor C2 begins to be increased slowly until the current of inductance L2 is dropped to zero, the reverse voltage of C2 is reached the maximum. D4 is switched off naturally, and this stage is over. At this stage, D4 is switched on at zero voltage and zero current.

Stage 3: positive excitation energy is transmitted, reverse voltage of C2 is remained unchanged.

This stage starts, after the reverse voltage of the capacitor C2 being reached the maximum. At this stage, D4 is still kept off, the current of inductance L2 is remained at zero, and the reverse voltage of C2 is remained unchanged, preparing for the low voltage switch-off of the switching tube. At this stage, the forward energy is transmitted to the load through D1 and L1, and the current of diode D1 and inductance L1 is risen synchronously and linearly until the switching tube S is switched off, and this stage is over.

In this embodiment, the capacitor C2 is selected according to the first selection step; the steps of the first selection step include:

step 101, selecting the capacitance $C_2$ of the capacitor C2 of energy storage according to the formula:

$$C_2 \leq \frac{n^2(d-1)^2}{\pi^2 f^2 L_M} \quad ;$$

step 102, calculating the withstand voltage $V_{C2,max}$ of the capacitor C2 of energy storage according to the formula:

$$V_{C2,max} = \frac{V_i dT}{\sqrt{C_2 L_m}} \quad ;$$

In the formula above, the $d$ is the duty ratio of the switching tube S, the $n$ is the turns ratio of the primary winding and the secondary winding of the high-frequency transformer T, $L_m$ is the excitation inductance of the primary winding of the high-frequency transformer T, $f$ is the operating frequency of the forward converter main circuit 1, $V_i$ is the input voltage of the forward converter main circuit 1.

step 103, selecting the capacitor of energy storage with a capacitance $C_2$ and a withstand voltage greater than $V_{C2,max}$.

In this embodiment, the inductance L1 is selected according to the second selection step; wherein the steps of the second selection step include:

step 201, determining the maximum current $I_{L1,max}$ of the inductance L1 according to the formula:

$$I_{L1,max} = \frac{V_o}{R_L} + \frac{1}{2} \frac{\left(\frac{V_i}{n} - V_O\right)}{L_1} dT \quad ;$$

step 202, determining the value range of the inductance $L_1$ of the inductance L1 according to the following formulas:

$$L_1 \leq \alpha L_m \frac{(V_i - nV_O)R_L dT + 2nV_O L_1}{2n^2 R_L V_i dT}$$

$$L_1 \leq \frac{(\beta(1-d)T)^2}{\left[ C_2 \left[ \arcsin \left( \frac{-V_O}{\sqrt{I_{L1,\max}^2 \frac{L_1}{C_2} + (V_{C2,\max} - V_O)^2}} \right) - \varphi \right] \right]^2}$$

$$L_1 \geq \frac{2L_{W2}\sqrt{L_2 + L_{W2}} \times (V_i - nV_o)}{\sqrt{L_2 + L_{W2}} \times ((dT + (d-1)T)nV_o - V_i dT) - n\sqrt{C_2}L_{W2}V_{C2,\max}}$$

$$\alpha = \frac{1}{10}$$

In the formula above, , $L_{W2}$ is the inductance of the secondary winding of the high-frequency transformer T, $V_o$ is the output voltage of the forward converter main circuit 1;

step 203, selecting the inductance that satisfying the inductance and overcurrent capability according to the steps 201 and 202.

In this embodiment, the diode D3 and the diode D4 are selected according to the third selection step; the steps of the third selection step include:

step 301, calculating the maximum current $I_{D3,\max}$ flowing through the diode D3 according to the following formula:

$$I_{D3,\max} = nI_{Lm,\max} + I_{L1,\max}$$
$$= n\frac{V_i}{L_m}dT + \frac{V_o}{R_L} + \frac{V_i - nV_O}{2nL_1}dT$$

step 302, calculating the withstand voltage $V_{D3,\max}$ of the diode D3 according to the following formula:

$$V_{D3,\max} = \frac{V_i}{n}$$

step 303, selecting the diode according to the maximum current $I_{D3,\max}$ flowing through the diode and the withstand voltage $V_{D3,\max}$ of the diode;

step 304, calculating the maximum current $I_{D4,\max}$ flowing through the diode D4 according to the following formula:

$$I_{D4,\max} = I_{L2,\max} = \frac{\sqrt{C_2} \times V_{C2,\max}}{\sqrt{(L_2 n^2 + L_M)/n^2}}$$

step 305, calculating the withstand voltage $V_{D4,\max}$ of the diode D4 according to the following formula:

$$V_{D4,\max} = V_{C2,\max} = \frac{I_{C2,\max}\sqrt{L_2}}{\sqrt{C_2}}$$

$I_{L1,\max}$ is the maximum current flowing through the primary winding of the high-frequency transformer T, $I_{L2}$ is the current flowing through the inductance L2;

step 306, selecting the diode according to the maximum current $I_{D4,\max}$ flowing through the diode and the withstand voltage $V_{D4,\max}$ of the diode.

It should be understood that the above description is merely to illustrate the feasibility of the technical solution of the present disclosure, and the principles and corresponding formulas of one of the listed working modes are not the only and limited descriptions, and are only used for reference.

It should be particularly noted that the above embodiments are only used to illustrate the technical solutions of the present disclosure, not to limit them. For those skilled in the art, the technical solutions described in the above embodiments may be modified, or some of the technologies features are equivalently replaced; and all these modifications and replacements should fall within the scope of protection of the appended claims of the present disclosure.

## Claims

1.  A secondary series LCD excitation energy transfer forward converter capable of suppressing output energy backflow, comprising:

    a forward converter main circuit (1); and
    an energy transfer and transmission circuit (2) connected to the forward converter main circuit (1);

    wherein, the forward converter main circuit (1) includes:

    a high-frequency transformer T;
    a switching tube S;
    a diode D1;
    a diode D2;
    an inductance L1; and

    a capacitor C1; and

    wherein, the same-named end of the primary side of the high-frequency transformer T is the positive voltage input end IN+ of the forward converter main circuit (1), which is connected to the positive output end of the external power supply, and the different-named end of the primary side of the high--frequency transformer T is connected to the drain of the switching tube S; the source of the switching tube S is the negative voltage input end IN- of the forward converter main circuit (1), which is connected to the negative output end of the external power supply; the gate of the switching tube S is connected to the output end of the external controller; the same-named end of the secondary side of the high-frequency transformer T is connected to the anode of the diode D1, the cathode of the diode D1 is connected to the cathode of the diode D2 and one end of the inductance L1; the other end of the inductance L1 is connected to one end of the capacitor C1 and is the positive voltage output end OUT+ of forward converter main circuit (1); the different-named end of the secondary side of the high-frequency transformer T is connected to the anode of the diode D2 and the other end of the capacitor C1 and is the negative voltage output end OUT- of the forward converter main circuit (1); the negative voltage output end OUT- of the forward converter main circuit (1) is grounded;
    wherein, the energy transfer and transmission circuit (2) includes:

    a diode D3;
    a capacitor C2;
    a diode D4; and

    an inductance L2; and
    wherein, the anode of the diode D3 is connected to the anode of the diode D2, the cathode of the diode D3 is connected to one end of the capacitor C2, the other end of the capacitor C2 is connected to the anode of the diode D1, one end of the inductance L2 is connected to the cathode of the diode D4, the other end of the inductance L2 is connected to the cathode of the diode D1, and the anode of the diode D4 is connected to the cathode of the diode D3.

2. The secondary series LCD excitation energy transfer forward converter capable of suppressing output energy backflow as in claim 1, wherein the diodes D1 and D2 are fast recovery diodes.

3. The secondary series LCD excitation energy transfer forward converter capable of suppressing output energy backflow as in claim 1 or 2, wherein the switching tube S is a fully-controlled power semiconductor device.

4. The secondary series LCD excitation energy transfer forward converter capable of suppressing output energy backflow as in any one of claims 1 to 3, wherein the capacitor C2 of the secondary series LCD excitation energy transfer forward converter capable of suppressing output energy backflow is selected according to the first selection step; wherein the steps of the first selection step include:

step 101, selecting the capacitance $C_2$ of the capacitor C2 of energy storage;
step 102, combining the input voltage $V_1$ of the converter to calculate the withstand voltage $V_{C2,max}$ of the capacitor C2 of energy storage;
step 103, selecting the capacitor of energy storage with a capacitance $C_2$ and a withstand voltage greater than $V_{C2,max}$.

5. The secondary series LCD excitation energy transfer forward converter capable of suppressing output energy backflow as in any one of claims 1 to 4, wherein the inductance L1 of the secondary series LCD excitation energy transfer forward converter capable of suppressing output energy backflow is selected according to the second selection step; wherein the steps of the second selection step include:

step 201, determining the maximum current $I_{L1,max}$ of the inductance L1;
step 202, determining the value range of the inductance $L_1$ of the inductance L1;
step 203, selecting the inductance according to the steps 201 and 202.

6. The secondary series LCD excitation energy transfer forward converter capable of suppressing output energy backflow as in any one of claims 1 to 5, wherein the diode D3 and the diode D4 of the secondary series LCD excitation energy transfer forward converter capable of suppressing output energy backflow are selected according to the third selection step; wherein the steps of the third selection step include:

step 301, calculating the maximum current $I_{D3,max}$ flowing through the diode D3;
step 302, calculating the withstand voltage $V_{D3,max}$ of the diode D3;
step 303, selecting the diode according to the maximum current $I_{D3,max}$ flowing through the diode and the withstand voltage $V_{D3,max}$ of the diode;
step 304, calculating the maximum current $I_{D4,max}$ flowing through the diode D4;
step 305, calculating the withstand voltage $V_{D4,max}$ of the diode D4;
step 306, selecting the diode according to the maximum current $I_{D4,max}$ flowing through the diode and the withstand voltage $V_{D4,max}$ of the diode.

FIG. 1

Europäisches
Patentamt

European
Patent Office

Office européen
des brevets

# EUROPEAN SEARCH REPORT

**Application Number**

EP 20 19 1075

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/136033 A1 (HIROKAWA MASAHIKO [JP] ET AL) 26 September 2002 (2002-09-26) * figures 1,3,5 * | 1-6 | INV. H02M3/335 |
| X | JP 2008 043092 A (SHINDENGEN ELECTRIC MFG) 21 February 2008 (2008-02-21) * figure 6 * | 1-6 | |
| X | US 6 333 861 B1 (GOODMAN MALCOLM [GB]) 25 December 2001 (2001-12-25) * figure 2 * | 1-6 | |
| A | CN 105 703 627 B (XI'AN UNIV OF SCIENCE AND TECH) 8 May 2018 (2018-05-08) * figure 1 * | 1-6 | |

**TECHNICAL FIELDS SEARCHED (IPC)**

H02M

The present search report has been drawn up for all claims

| Place of search | Date of completion of the search | Examiner |
|---|---|---|
| The Hague | 29 January 2021 | van der Weiden, Ad |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 920 401 A1**

## ANNEX TO THE EUROPEAN SEARCH REPORT
## ON EUROPEAN PATENT APPLICATION NO.

EP 20 19 1075

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2021

| Patent document cited in search report | | Publication date | Patent family member(s) | | Publication date |
|---|---|---|---|---|---|
| US 2002136033 | A1 | 26-09-2002 | EP | 1189333 A1 | 20-03-2002 |
| | | | JP | 3400443 B2 | 28-04-2003 |
| | | | US | 2002136033 A1 | 26-09-2002 |
| | | | WO | 0079674 A1 | 28-12-2000 |
| JP 2008043092 | A | 21-02-2008 | JP | 5032070 B2 | 26-09-2012 |
| | | | JP | 2008043092 A | 21-02-2008 |
| US 6333861 | B1 | 25-12-2001 | NONE | | |
| CN 105703627 | B | 08-05-2018 | NONE | | |

EPO FORM P0459

For more details about this annex : see Official Journal of the European Patent Office, No. 12/82